# EUROPÄISCHE PATENTANMELDUNG

(11) **EP 1 889 860 A1**
(43) Veröffentlichungstag der Anmeldung: **20.02.2008**
(21) Anmeldenummer: 07114001.6
(22) Anmeldetag: 08.08.2007
(51) Int. Cl.: C08G 18/08, C08G 18/12, C08G 18/18, C08G 18/48, C08G 18/50, C09D 175/02, C08K 5/00, C08K 5/521

(54) **Isocyanatgruppen enthaltende Semi-Prepolymere zur Herstellung von flammgeschützten Polymeren**

(30) Priorität: 15.08.2006 EP 06118955
(71) Anmelder: BASF Aktiengesellschaft, 67056 Ludwigshafen (DE)
(72) Erfinder: Reese, Hans-Jürgen, 49401, Damme (DE); Werther, Sonja, 49453, Wetschen (DE); Schapka, Reinhold, 49088, Osnabrück (DE)

(57) **Zusammenfassung**

Gegenstand der Erfindung ist ein Isocyanatgruppen enthaltendes Semi-Prepolymer zur Herstellung von flammgeschützten Polymeren, herstellbar durch Umsetzung von
(i) einem Polyisocyanat mit
(ii) einem halogenierten, Hydroxylgruppen enthaltenden Polyether in Gegenwart von
(iii) einem organischen Phosphat.

## Beschreibung

Gegenstand der Erfindung sind Isocyanatgruppen enthaltende Semi-Prepolymere, die als Isocyanatkomponente zur Herstellung von Polyurethanen und/oder Polyharnstoffen eingesetzt werden können und die den daraus hergestellten Polymeren flammhemmende Eigenschaften verleihen, ihre Herstellung und ihre Anwendung.

Für die Herstellung von Polyurethanbeschichtungen sowie Polyharnstoffbeschichtungen sind eine ganze Reihe von Formulierungen bekannt, die als fertige polymere Beschichtungen flammhemmende Eigenschaften aufweisen. Diese flammhemmenden Eigenschaften werden üblicherweise durch die Verwendung von sogenannten Flammschutzmitteln erzielt, die Bestandteile dieser Formulierung sind.

Als Flammschutzmittel werden sowohl gegenüber den Einsatzprodukten für die Herstellung der Polymere inerte Verbindungen, die nicht in die Polymermatrix eingebaut werden, auch als additive Flammschutzmittel bezeichnet, als auch Verbindungen mit aktiven Wasserstoffatomen im Molekül, auch als reaktive, einbaubare Flammschutzmittel bezeichnet, verwendet. Diese Flammschutzmittel werden in 2-Komponenten-Formulierungen für Polyurethan- bzw. Polyharnstoffsysteme in der Hauptsache als Einzelzusätze oder auch in verschiedenen Kombinationen in die flüssigen Ausgangskomponenten eingearbeitet.

Der Zusatz der Flammschutzmittel erfolgt vorzugsweise zur Polyolkomponente, wobei die Art und Menge der Flammschutzmittel je nach gewählter Formulierung variieren kann.

Der ebenfalls bekannte und beschriebene Einsatz von Flammschutzmitteln in Isocyanatkomponenten stößt in vielen Fällen auf technische Schwierigkeiten, die sich insbesondere wie folgt beschreiben lassen:
1. Der Einsatz von Flammschutzmitteln für die kommerzielle Fertigung der Polymere ist auf flüssige Flammschutzmittel beschränkt, da feste Flammschutzmittel sowohl Fertigungs- als auch Verarbeitungsprobleme verursachen können.
2. Additive flüssige Flammschutzmittel müssen zur Erreichung ausreichender Flammschutzwirkung in höherer Menge eingesetzt werden und beeinflussen die Eigenschaften der Endprodukte, insbesondere ihre Härte, in erhöhten Maße. Außerdem können sie aus dem Polymeren migrieren. Reaktive, einbaubare Flammschutzmittel beeinflussen in den für Flammschutz notwendigen Mengen die Viskosität der Einsatzkomponenten in erheblichen Maße, so dass die Verarbeitung wegen der erhöhten Viskosität auf technische Schwierigkeiten stößt.

So ist aus EP 208 226 eine Isocyanatkomponente zur Herstellung von Polymeren mit flammhemmenden Eigenschaften bekannt. Nach dieser Lösung wird ein NCOterminiertes Prepolymer eingesetzt, welches durch Reaktion eines Diisocyanats mit einem alkoxylierten und halogenierten Bisphenol A oder einem halogenierten Neopentylglykol gewonnen wird. Die Anwendung dieser Isocyanatkomponente erfolgt in einer wässrigen Zusammensetzung zur Textilbeschichtung und verleiht dem Textil neben anderen Eigenschaften den gewünschten Flammschutz. Für die üblichen Anwendungen, insbesondere bei der Polyurethan- bzw. Polyharnstoffbeschichtung wäre die Viskosität dieses Produktes zu hoch.

Für die Herstellung von Polyurethanen und Polyharnstoffen durch Umsetzung Polyisocyanaten mit Verbindungen mit mindestens zwei mit Isocyanatgruppen reaktiven Wasserstoffatomen, insbesondere Beschichtungen, die nach dem Sprühverfahren hergestellt werden, ist eine geringe Viskosität notwendig, um die erforderliche Fließfähigkeit der Reaktionsmischung auf der zu beschichtenden Oberfläche zu gewährleisten. Wie oben ausgeführt, ist derzeit kein Verfahren bekannt, bei dem eine hohe Flammfestigkeit und gleichzeitig eine geringe Viskosität der eingesetzten flüssigen Ausgangskomponenten der Beschichtung vorliegt.

Es war demzufolge Aufgabe der vorliegenden Erfindung, Polyurethane und/oder Polyharnstoffe bereitzustellen, die eine hohe Flammfestigkeit aufweisen und die gleichzeitig gut zu verarbeiten sind. Insbesondere sollten die Produkte besonders gut nach dem Sprühverfahren verarbeitbar sein.

Die Aufgabe konnte überraschenderweise gelöst werden durch den Einsatz der unten näher charakterisierten Semi-Prepolymere. Unter dem Begriff Semi-Prepolymere werden solche Produkte verstanden, bei denen ein Polyisocyanat mit einem solchen Unterschuss von Verbindungen mit mindestens zwei mit Isocyanatgruppen reaktiven Wasserstoffatomen umgesetzt wird, so dass nur ein Teil des Polyisocyanats in die Prepolymerbildung einbezogen wird und der Rest in unveränderter Form vorliegt. Derartige Produkte werden beispielsweise im Kunststoffhandbuch, Band 7 "Polyurethane" Carl Hanser Verlag München Wien, 3. Auflage 1993, auf Seite 27 beschrieben.

Gegenstand der Erfindung sind Isocyanatgruppen enthaltende Semi-Prepolymere, das herstellbar ist durch Umsetzung von
(i) einem Polyisocyanat mit
(ii) einem halogenierten, Hydroxylgruppen enthaltenden Polyether in Gegenwart von
(iii) einem organischen Phosphat.

Gegenstand der Erfindung ist weiterhin ein Verfahren zur Herstellung der erfindungsgemäßen Isocyanatgruppen enthaltenden Semi-Prepolymere durch Umsetzung von
(i) einem Polyisocyanat mit
(ii) einem halogenierten, Hydroxylgruppen enthaltenden Polyether in Gegenwart von
(iii) einem organischen Phosphat.

Gegenstand der Erfindung ist weiterhin die Verwendung der erfindungsgemäßen Isocyanatgruppen enthaltenden Semi-Prepolymeren zur Herstellung von Polyurethanbeschichtungen, Polyharnstoffbeschichtungen, Polyurethan/Polyharnstoff-Hybridbeschichtungen, insbesondere nach dem Sprühverfahren.

Gegenstand der Erfindung ist weiterhin ein Verfahren zur Herstellung von Polyurethanen und/oder Polyharnstoffen durch Umsetzung von
a) Polyisocyanaten mit
b) Verbindungen mit mindestens zwei mit Isocyanatgruppen reaktiven Wasserstoffatomen,
dadurch gekennzeichnet, dass als Polyisocyanate a) die erfindungsgemäßen Isocyanatgruppen enthaltende Semi-Prepolymere eingesetzt werden.

Mit den erfindungsgemäßen Isocyanatgruppen enthaltenden Semi-Prepolymeren ist es überraschenderweise möglich, Polyurethane und/oder Polyharnstoffe bereitzustellen, die einerseits eine hohe Flammfestigkeit und andererseits eine niedrige Viskosität aufweisen und die daher auch im Sprühverfahren zu Beschichtungen verarbeitet werden können.

Diese, eine Kombination von additivem Flammschutzmittel und flammhemmenden Polymerstrukturen enthaltenden NCO-terminierten Verbindungen wurden, in Sinne der flammhemmenden Wirkung, als synergistisch wirkendes Gemisch gefunden, bei deren Verwendung Probleme bisher bekannter Art, wie hohe Viskosität oder migrierende additive Flammschutzmittel, vermieden werden.

Als Komponente (i) können die üblichen und bekannten Polyisocyanate eingesetzt werden.

Dabei kann es sich um aliphatische und vorzugsweise aromatische Polyisocyanate handeln. Aliphatische Polyisoycanate, vorzugsweise Hexamethylendiisocyanat (HDI) und Isophorondiisocyanat (IPDI), kommen besonders dann zum Einsatz, wenn eine hohe Farbstabilität der Polyurethane gewünscht wird.

Bei den aromatischen Polyisocyanaten werden besonders bevorzugt Diphenylmethandiisocyanat, Polyphenylenpolymethylenpolyisocyanat und Gemische daraus eingesetzt.

Die halogenierten, Hydroxylgruppen enthaltenden Polyether haben vorzugsweise eine Hydroxylzahl von 240 mgKOH/g ± 30 mgKOH/g.

Als besonders geeignet für das erfindungsgemäße Semi-Prepolymer wird als halogenierter, Hydroxylgruppen enthaltender Polyether (ii) ein polymeres Diol, hergestellt aus 2-butyl-1,4-diol polymerisiert mit (Chloromethyl)oxiran welches bromiert, dehydrochloriniert und methoxyliert wurde, eingesetzt. Ein solches Diol wird als IXOL M125^{®} von der Solvay vertrieben.

Wie bereits beschrieben, handelt es sich bei den organischen Phosphaten (iii) um solche, die keine mit Isocyanatgruppen reaktiven Gruppen enthalten, also um additive Flammschutzmittel. Bevorzugte organische Phosphate (iii) sind Trialkylphosphate sowie die Trichloralkylphosphate. Die Alkylreste haben vorzugsweise 1 bis 4, besonders bevorzugt 1 bis 3 Kohlenstoffatome. Besonders bevorzugte Verbindungen (iii) sind Trimethylphosphat, Triethylphosphat, Tripropylphosphat, Trichlormethylphosphat, Trichlorethylphospat und Trichlorpropylphosphat. Diese können einzeln oder in beliebigen Gemischen untereinander eingesetzt werden.

Die Komponenten (i), (ii) und (iii) werden zur Herstellung der Semi-Prepolymere vorzugsweise in einem Gewichts-Verhältnis von 12±4 : 5±3 : 3±2 eingesetzt. Die so hergestellten Semi-Prepolymere haben vorzugsweise einen NCO-Gehalt im Bereich 12 bis 27 Gew.-%, vorzugsweise 14 bis 25 Gew.-%.

Die Viskosität der Semi-Prepolymere liegt vorzugsweise bei < 1200 mPas bei 25 °C; bestimmt nach DIN 51018.

Die Herstellung der erfindungsgemäßen Semi-Prepolymere erfolgt nach üblichen und bekannten Verfahren. Dazu werden die Komponenten (i), (ii) und (iii) unter Rühren gemischt und umgesetzt. Die Reaktion kann ohne Katalysator oder unter Verwendung üblicher Urethan-Katalysatoren durchgeführt werden. Vorzugsweise wird die Umsetzung im üblichen Temperaturbereich von 60 bis 90 °C durchgeführt. Im Gemisch mit der Komponente (ii) können noch weitere Polyole, insbesondere 2-funktionelle Alkohole eingesetzt werden. Diese Polyole, vorzugsweise Diole, haben vorzugsweise ein Molekulargewicht im Bereich zwischen 400 bis 4000 g/mol. Die eingesetzte Menge richtet sich nach den gewünschten mechanischen Eigenschaften der fertigen Spritzbeschichtung. Vorzugsweise werden sie in einer Menge von größer 0 bis 30 Gew.-%, insbesondere von 2 bis 30 Gew.-%, jeweils bezogen auf das Semi-Prepolymer je nach gewünschten mechanischen Eigenschaften der fertigen Spritzbeschichtung, eingesetzt.

Die erfindungsgemäßen Semi-Prepolymere werden, wie beschrieben, als Isocyanatkomponente zur Herstellung von Polyurethanen und Polyharnstoffen, vorzugsweise zur Herstellung von Polyurethanbeschichtungen, Polyharnstoffbeschichtungen, Polyurethan/Polyharnstoff-Hybridbeschichtungen, insbesondere nach dem Sprühverfahren, eingesetzt. Bei den Beschichtungen handelt es sich vorzugsweise um kompakte Polymere.

Zur Herstellung der Polyurethane und Polyharnstoffe werden die erfindungsgemäßen Semi-Prepolymere mit Verbindungen mit mindestens zwei mit Isocyanatgruppen reaktiven Wasserstoffatomen umgesetzt. Im Falle der Polyurethane handelt es sich bei den Verbindungen mit zwei mit Isocyanatgruppen reaktiven Wasserstoffatomen zumeist um Verbindungen mit mindestens zwei Hydroxylgruppen. Im Falle der Polyharnstoffe werden als Verbindungen mit mindestens zwei mit Isocyanatgruppen reaktiven Wasserstoffatomen solche mit mindestens einer Aminogruppe im Molekül und bei Hybridsystemen Mischungen aus den vorgenannten Verbindungen eingesetzt.

Als Verbindungen mit mindestens zwei Hydroxylgruppen im Molekül kommen vorzugsweise Polyesteralkohole und/oder Polyetheralkohole mit OH-Zahlen im Bereich von 20 bis 1200, vorzugsweise von 100 bis 1200 mgKOH/g zum Einsatz. Insbesondere werden Polyetheralkohole mit einer Funktionalität zwischen 2 und 8, insbesondere 3 bis 8, eingesetzt.

Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 2, vorzugsweise 3 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und /oder Polyamine, beispielsweise Phenylendiamine, 2,3-, 2,4-, 3,4- und 2,6-Toluylendiamin und 4,4'-, 2,4'- und 2,2'-Diamino-diphenylmethan sowie aliphatische Di- und Polyamine, wie Ethylendiamin, eingesetzt.

Art und Menge der Polyole hängen von den gewünschten mechanischen Eigenschaften der Endprodukte ab.

Als Verbindungen mit mindestens einer Aminogruppe im Molekül werden zumeist mindestens ein, vorzugsweise eine Mischung aus mindestens zwei Polyoxyalkylenaminen, sogenannten Polyetheraminen, d. h. von aminterminierten di- beziehungsweise höherfunktionellen Polyalkylen-, in der Regel Polyoxyethylen- beziehungsweise Polyoxypropylenoxiden, mit Molekulargewichten zwischen 200 und 5000 g mol⁻¹, insbesondere von 2000 bis 5000 g mol⁻¹, eingesetzt. Möglich ist auch der Einsatz von aminterminiertem PTHF. Die Amingruppen der Polyetheramine sind vor allem primäre Amingruppen. Es kann auch, wie ausgeführt, nur ein einziges Polyetheramin verwendet werden. Die Polyetheramine sind insbesondere Diamine oder Triamine. Derartige Verbindungen werden beispielsweise von der Firma Huntsman unter der Bezeichnung Jeffamine^{®} bzw. von der Firma BASF Aktiengesellschaft als Polyetheramine vertrieben.

Zumeist werden Polyamine durch katalytische Aminierung der entsprechenden Polyalkohole hergestellt.

Die Polyoxyalkylenamine bi) dienen vorwiegend dem Aufbau der Weichphase in den Polyharnstoff-Sprühelastomeren.

Bei Hybridsystemen wird zumindest ein Teil der verwendeten Amine durch Polyetherole substituiert. Bevorzugt beträgt der Anteil amin- gegenüber hydroxylterminierter Polyether in der Aminkomponente bei derartigen Produkten mehr als 50 Gew.-%.

Weiterhin können die Verbindungen mit mindestens zwei mit Isocyanatgruppen reaktiven Wasserstoffatomen niedermolekulare Verbindungen, in der Regel Diamine, als Kettenverlängerer enthalten. Diese Verbindungen haben zumeist ein Molekulargewicht im Bereich zwischen 150 und 500 g/mol. Die Amingruppen der Ketternverlängerer können primär beziehungsweise sekundär sein. Der in Polyharnstoff-Sprühelastomeren zumeist eingesetzte Kettenverlängerer ist Diethylentoluoldiamin (DETDA). Als im Vergleich zu aliphatischen Aminen unreaktivere Komponente determiniert DETDA das Aushärteverhalten des Systems. Entsprechend kann die Gelzeit durch alternative Kettenverlängerer mit gegenüber Isocyanaten herabgesetzter Reaktivität gesteuert werden. Um lichtstabile Polyharnstoff-Sprühelastomere zu erhalten, können auch aliphatische Kettenverlängerer eingesetzt werden.

Darüber hinaus können alternative aminische Kettenverlängerer wie 4,4'-Methylenbis-(2,6-diethyl)-anilin (MDEA), 4,4'-Methylenbis-(2,6-diisopropyl)-anilin (MDIPA), 4,4'-Methylenbis-(3-chloro, 2,6-diethyl)-anilin (MCDEA), Dimethylthio-toluoldiamin (DMTDA, Ethacure^{®} 300) oder reaktionsverzögernde Kettenverlängerer mit sekundären Aminfunktionen wie N,N'-Di(sec-butyl)-amino-biphenylmethan (DBMDA, Unilink^{®} 4200) oder N,N'-Di-sec-butyl-p-phenylendiamin (Unilink^{®} 4100) eingesetzt werden.

Weitere, nicht zwingend erforderliche Formulierungsbestandteile sind beispielsweise Verdünner, zumeist Reaktivverdünner, die, wenn angewendet, in der Regel der Isocyanatkomponente beigefügt werden. Beispiele für Reaktivverdünner der Isocyanatkomponente sind Alkylencarbonate. Allerdings kann die Zugabe von Reaktivverdünnern zu einer Verschlechterung der mechanischen Eigenschaften und der Alterungsbeständigkeit des Polyharnstoff Sprühelastomers führen. Auf Grund der niedrigen Viskosität der erfindungsgemäßen Semi-Prepolymere kann auf den Einsatz von Verdünnern zumeist verzichtet werden.

Die Zugabe von Additiven zu den Verbindungen mit mindestens zwei mit Isocyanatgruppen reaktiven Wasserstoffatomen ist durch eine verarbeitbare Viskosität limitiert. Solche Addititive sind Pigmente, Haftvermittler, UV-Stabilisatoren, Antioxidantien oder sonstige Füllstoffe. Die Komponente b) kann weiterhin insbesondere Abriebverbesserer enthalten. Als Abriebverbesserer werden vorzugsweise mit Silikon modifizierte Alkohole, insbesondere Glykole, zum Einsatz.

Das System wird in der Regel durch Sprühen appliziert, wobei die Komponenten unter hohem Druck und bei erhöhter Temperatur vor ihrem Austrag aus der Sprühpistole in deren Mischkopf vermischt und so zur Reaktion gebracht werden.

Das volumetrische Verhältnis, in welchem das Polyisocyanat und die Verbindungen mit mindestens zwei mit Isocyanatgruppen reaktiven Wasserstoffatomen versprüht werden, ist bevorzugt 1:1, kann aber auch von 30:70 bis zu 70:30 Volumen-%, bevorzugt aber bis zu 1,1:1 betragen.

Die besprühte Oberfläche kann, insbesondere wenn sie feucht ist, zur Verbesserung der Adhäsion mit einem Primer vorbehandelt sein. Der Adhäsionsverbesserer kann, ebenfalls insbesondere für die Haftung auf feuchtem Untergrund, auch den Polyisocyanaten beziehungsweise bevorzugt den Verbindungen mit mindestens zwei mit Isocyanatgruppen reaktiven Wasserstoffatomen zugegeben werden.

Beispiele für Primer sind Siloxane und funktionalisierte Siloxane. Insbesondere zu nennen sind Epoxy- Amino- bzw. Vinyl-Alkoxysilane. Weitere Beispiele für kommerziell erhältliche Primer sind Titanate wie Neopentyl(diallyl)oxytri(m-amino)phenyl-Titanat oder Zirkonate wie Neopentyl(diallyl)oxy tri(m-ethylendiamino)ethyl-Zirkonat. Weitere mögliche Primer sind 1 K- bzw. 2K-Polyurethansysteme, Polyvinylamine, Polyacrylate bzw. Epoxidharze. Die Primer können vor der Applikation in Wasser oder anderen Lösungsmitteln dispergiert, emulgiert oder gelöst werden.

Das Verhältnis von Isocyanat- zu mit Isocyanat reaktiven Gruppen, insbesondere, wie ausgeführt, Amingruppen, bei der Herstellung der Polyharnstoff-Sprühelastomere liegt zumeist zwischen 0,90 und 1,20, insbesondere zwischen 1,05 und 1,15.

Durch die erfindungsgemäßen Semi-Prepolymere können, wie beschrieben, flammgeschützte Polyurethane und Polyurethan-Harnstoffe erhalten werden, die die Brandtklasse B2 nach DIN 4102, Teil 1 erreichen. Auf Grund der niedrigen Viskosität können sie nach dem Sprühverfahren verarbeitet werden, wobei zumeist auch auf Verdünner verzichtet werden kann.

Diese Beschichtungen können insbesondere als Spritzbeschichtungen für Wand- und Dachisolierungen eingesetzt werden, um diese feuerresistenter zu gestalten.

Die Erfindung soll an den nachfolgenden Beispielen näher beschrieben werden:

### Ausführungsbeispiel 1a (Herstellung der Isocyanatkomponente)

In einem Reaktor mit Rührwerk sowie Heiz- und Kühlvorrichtung wurden 6300 g eines Isomerengemisches aus ca. 50 % 4,4'-Diphenylmethandiisocyanat und ca. 50 % 2,4'-Diphenyl-methandiisocyanat, erhältlich unter dem Handelsnamen Lupranat^{®} MI der BASF Aktiengesellschaft, vorgelegt. Aus 1400 g eines Diols, hergestellt aus 2-butyl-1,4-diol polymerisiert mit (Chloromethyl)oxiran welches bromiert, dehydrochloriniert und methoxyliert wurde und unter dem Handelsnamen IXOL^{®} M125 von der Solvay erhältlich ist, 1300 g eines Polypropylenglykols mit einem Molekulargewicht von 2000, erhältlich unter dem Handelsnamen Lupranol^{®} 1000 der BASF Aktiengesellschaft sowie 2 g Diglykol-bis-chlorformiat wurde ein Gemisch hergestellt.

Dieses Gemisch wurde unter Rühren langsam dem vorgelegten Isocyanat zugegeben.

Nach Zugabe von 1000 g Trichlorpropylphosphat, erhältlich unter dem Handelsnamen Lupragen^{®}TCPP wurde das Reaktionsgemisch unter weiteren Rühren auf eine Temperatur von 80 °C erwärmt und 1 Stunde bei dieser Temperatur die Prepolymersynthese durchgeführt.

Nach dem Abkühlen und Ablassen aus dem Reaktor erhielt man ein Produkt mit folgenden Eigenschaften:

| | |
|---|---|
| Viskosität (bei 25 °C) | 820 mPas (gemessen nach DIN 51018) |
| Dichte (bei 25 °C) | 1,24 g/cm³ |
| Isocyanat-Gehalt | 17,5 %NCO |

### Ausführungsbeispiel 1b (Herstellung eines Polyurethanpolyharnstoffsystems)

### Isocyanatkomponente:

Es wurde die Komponente gemäß Ausführungsbeispiel 1a verwendet

### Polyolkomponente:

Aus 7150 g eines difunktionellen Polyetheramins, Molekulargewicht 2000, 260 g Diethyltoluoldiamin, 20 g eines zeolithischen Trockenmittels (50 % in Rizinusöl), 450 g Monoethylenglykol, 5 g Triethylendiamin (33 %-ig in Dipropylenglykol) sowie 30 g einer Aluminium-Pigment-Paste wurde durch Homogenisierung dieses Gemisches mittels Rührwerk eine sogenannte Polyolkomponente hergestellt.

Beide Komponenten wurden im Gewichts-Mischungsverhältnis 1:1 mittels einer 2-Komponenten-Verarbeitungsmaschine mit Sprühvorrichtung zu einer Spritzbeschichtung verarbeitet.

### Ausführungsbeispiel 1c (Testung der Flammschutzwirkung)

Eine Materialprobe dieser Spritzbeschichtung gemäß Ausführungsbeispiel 1b wird einem Brandt-Test nach DIN 4102, Teil1 unterzogen. Nach der dabei gemessenen Flammhöhe von 8 cm wird die Brandtklasse B2 erfüllt.

## Patentansprüche

1. Isocyanatgruppen enthaltende Semi-Prepolymere zur Herstellung von flammgeschützten Polymeren, herstellbar durch Umsetzung von
(i) einem Polyisocyanat mit
(ii) einem halogenierten, Hydroxylgruppen enthaltenden Polyether in Gegenwart von
(iii) einem organischen Phosphat.

2. Isocyanatgruppen enthaltende Semi-Prepolymere nach Anspruch 1, **dadurch gekennzeichnet, dass** als Polyisocyanat (i) Diphenylmethandiisocyanat, Polyphenylenpolymethylenpolyisocyanat und/oder Gemische daraus eingesetzt wird.

3. Isocyanatgruppen enthaltende Semi-Prepolymere nach Anspruch 1, **dadurch gekennzeichnet, dass** als hydroxyfunktioneller halogenierten Polyether (ii) ein polymeres Diol, hergestellt durch Anlagerung von (Chloromethyl)oxiran an 2-butyl-1,4-diol eingesetzt wird.

4. Isocyanatgruppen enthaltende Semi-Prepolymere nach Anspruch 1, **dadurch gekennzeichnet, dass** als hydroxyfunktioneller halogenierten Polyether (ii) ein polymeres Diol mit einer Hydroxylzahl von 240 mgKOH/g ± 30 mgKOH/g eingesetzt wird.

5. Isocyanatgruppen enthaltende Semi-Prepolymere nach Anspruch 1, **dadurch gekennzeichnet, dass** als organisches Phosphat (iii) ein Trialkylphosphat und/oder ein Trichloralkylphosphat eingesetzt wird.

6. Isocyanatgruppen enthaltende Semi-Prepolymere, nach Anspruch 1, **dadurch gekennzeichnet, dass** die Bestandteile (i), (ii) und (iii) in den GewichtsVerhältnissen 12±4 : 5±3 : 3±2 zum Semi-Prepolymer umgesetzt werden.

7. Verfahren zur Herstellung von Isocyanatgruppen enthaltenden Semi-Prepolymeren nach einem der Ansprüche 1 bis 6 durch Umsetzung von
(i) einem Polyisocyanat mit
(ii) einem halogenierten, Hydroxylgruppen enthaltenden Polyether in Gegenwart von
(iii) einem organischen Phosphat.

8. Verfahren zur Herstellung von Polyurethanen und/oder Polyharnstoffen durch Umsetzung von
a) Polyisocyanaten mit
b) Verbindungen mit mindestens zwei mit Isocyanatgruppen reaktiven Wasserstoffatomen,
**dadurch gekennzeichnet, dass** als Polyisocyanate a) Isocyanatgruppen enthaltende Semi-Prepolymere nach Anspruch 1 bis 6 eingesetzt werden.

9. Verwendung von Isocyanatgruppen enthaltenden Semi-Prepolymeren nach einem der Ansprüche 1 bis 6 als Isocyanat-Komponente zur Herstellung von flammgeschützten Polymeren, vorzugsweise Beschichtungen

10. Verwendung der Isocyanatkomponente nach Anspruch 6 als Reaktionskomponente zur Herstellung von Polyurethanbeschichtungen.

11. Verwendung von Isocyanatgruppen enthaltenden Semi-Prepolymeren nach einem der Ansprüche 1 bis 6 als Reaktionskomponente zur Herstellung von Polyharnstoffbeschichtungen.

12. Verwendung von Isocyanatgruppen enthaltenden Semi-Prepolymeren nach einem der Ansprüche 1 bis 6 als Reaktionskomponente zur Herstellung von Polyurethan/Polyharnstoff-Hybrid-beschichtungen.

13. Verwendung von Isocyanatgruppen enthaltenden Semi-Prepolymeren nach einem der Ansprüche 1 bis 6 als Reaktionskomponente zur Herstellung von Polyurethan- und/oder Polyharnstoffbeschichtungen im Sprühverfahren.
